# EUROPEAN PATENT SPECIFICATION

(11) **EP 1 514 192 B1**
(45) Date of publication and mention of the grant of the patent: **28.08.2013**
(21) Application number: 03736798.4
(22) Date of filing: 02.06.2003
(51) Int. Cl.: G06F 13/14, G06F 15/16, G06F 17/00, H04M 7/00, G05B 13/02, H04W 48/18

(54) **METHOD AND APPARATUS FOR SWITCHING BETWEEN A FIRST AND A SECOND NETWORK**
VERFAHREN UND VORRICHTUNG ZUM UMSCHALTEN ZWISCHEN EINEM ERSTEN UND EINEM ZWEITEN NETZWERK
PROCEDE ET APPAREIL DE COMMUTATION ENTRE UN PREMIER ET UN DEUXIEME RESEAU

(30) Priority: 05.06.2002 US 385871 P
(43) Date of publication of application: 16.03.2005
(73) Proprietor: InterDigital Technology Corporation, Wilmington, DE 19809 (US)
(72) Inventor: GOLDBERG, Steven, Jeffrey, Downingtown, PA 19335 (US)
(74) Representative: Pierrou, Mattias
(86) International application number: PCT/US2003/017372
(87) International publication number: WO 2003/105000

(56) References cited:
- EP-A- 0 930 797
- US-A- 5 175 817
- US-A- 5 526 488
- US-A- 5 689 554
- US-A- 5 764 855
- US-A- 5 787 235
- US-A- 6 141 553
- US-B1- 6 240 449
- US-B1- 6 483 808
- US-B1- 6 516 352
- MAKELA J ET AL: "Handoff decision in multi-service networks" 11TH IEEE INTERNATIONAL SYMPOSIUM ON PERSONAL INDOOR AND MOBILE RADIO COMMUNICATIONS. PIMRC 2000. PROCEEDINGS (CAT. NO.00TH8525) IEEE PISCATAWAY, NJ, USA, vol. 1, 2000, pages 655-659, XP002335441 ISBN: 0-7803-6463-5
- SHUM K ET AL: "FUZZY LAYER SELECTION METHOD IN HIERARCHICAL CELLULAR SYSTEMS" IEEE TRANSACTIONS ON VEHICULAR TECHNOLOGY, IEEE INC. NEW YORK, US, vol. 48, no. 6, November 1999 (1999-11), pages 1840-1849, XP000928376 ISSN: 0018-9545
- JUNIUS ET AL: "Grundlagen der Fuzzy Logic" LEISTUNGSBEWERTUNG INTELLIGENTER HANDOVER-VERFAHREN FUER ZELLULARE MOBILFUNKSYSTEME, vol. 3, 1995, pages 183-190, XP002335567

## Description

FIELD OF THE INVENTION

The present invention relates to WLAN-WAN switching. More particularly, the present invention relates to method and apparatus to facilitate such switching taking into account both operator and user criteria and perspective.

BACKGROUND

User and service operators have conflicting perspectives as to the optimum utilization of link resources in a communication system. For example, a user, from his perspective, desires to have the cheapest and yet highest quality of service (QoS) available. On the other hand, from the perspective of the service operator there is typically a desire to provide the cheapest or least expensive service and to provide adequate QoS and security to keep most of its subscribers happy. In addition to a conflict of objectives as between the service operator and the user, there are actually conflicts within each of these groups as to their desires. For example, the lowest cost for the user may not be very secure. Likewise "adequate QoS" to support a user application may not be optimum to achieve an overall goal of revenue maximization from the point of view of the service provider.

Present day systems are limited to making fixed triggering assumptions about whether a transfer should be made between systems. Such fixed assumptions as to when to switch and not switch are usually placed on a few specific simulations of expected operational scenarios. While such switching decisions are adequate when the systems are lightly loaded or when the network is operating close to a scenario that has been modeled, such fixed assumptions do not take into account the myriad of other scenarios that will occur in real systems as loading and service applications evolve.

One typical method for selecting a link involves determining exact mathematical relationships between inputs and outputs and their complicated relationships. However, when a parameter falls outside of the boundaries of the equations employed, the system can become very inefficient and in the worst case the network may become unstable due, for example, to excessive switching and very low resource utilization. Adjustments to maintain the stability of the system and strive towards some optimization goals is very complicated and time consuming, necessitating a decision making process that is inherently stable, sensitive to both changing and unforeseen states and is easily modified when necessary.

European patent application having publication number EP 0 930 797 discloses an apparatus using fuzzy logic to determine when handovers are desirable and the extent to which the radio transmission power in a cellular telephone network should be adjusted. A mobile phone and a base transceiver station measure certain system parameters, including rate of handover, quality, distance, level, call duration, and power. These measurements are input to a fuzzifier. The fuzzifier applies standard fuzzy-set-theory membership functions to the measurements, and the fuzzifier outputs a set of fuzzy variables corresponding to the measurements. The fuzzifier outputs are input to an inference engine which contains a set of rules that, when applied to the inference engine inputs, indicate: when a handover should be performed; when a handover should not be performed; and the amount by which, if any, the transmission power should be adjusted.

However, in EP 0 930 797, there is no way for a user of a mobile phone to initiate or affect a handover.

SUMMARY

These attributes are accomplished through the provision of method and apparatus for controlling switching between WLANs and WANs which is implemented in a fuzzy logic design in which input data undergoes a fuzzification process, sorting inputs into membership values with associated linguistic variables. A rules engine operates on the membership values generating output membership data. The output of the rules engine then undergoes "defuzzification" to produce an actionable result.

BRIEF DESCRIPTION OF THE FIGURES

The present invention and its objectives and its advantages will be best understood from a consideration of the following figures in which like elements are designated by like numerals, and wherein:

Figure 1 is a block diagram of a device employing a fuzzy logic design and embodying the principles of the present invention.

Figure 2 is a plot of showing in relationship the membership function to usable in present network and usable in possible network.

Figure 3 is a plot of relationship of membership function to cost to user and cost to network.

Figure 4 is a plot relating membership function to usability need to switch.

DETAILED DESCRIPTION OF THE INVENTION AND THE PREFERRED EMBODIMENTS THEREOF

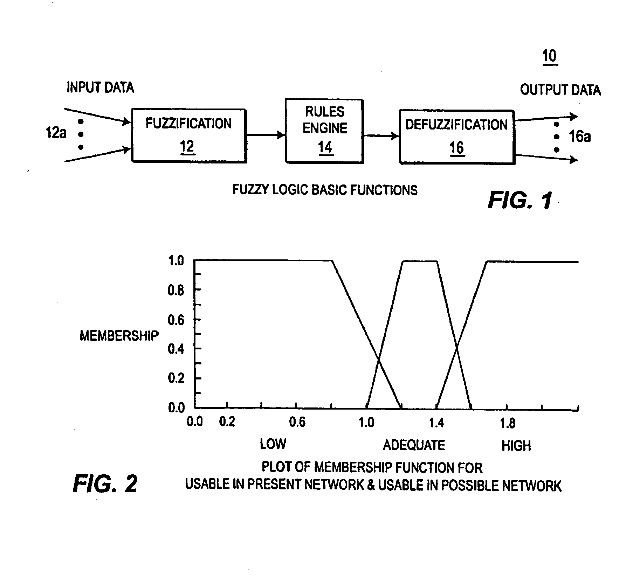

Figure 1 is a block diagram of a fuzzy logic design system for effecting the decision making process, such as switching between a network "A" and a network "B".

Input data enters into the fuzzification process at stage 12. Typical input data, entered at 12a, includes but, is not limited to, the following types of information:
Application quality of service (QoS) requirement, for example, latency, fidelity, security.
User service subscription particulars, for example, including: priority, incremental costs.
The state of network A, for example, loading and cost for QoS required.
The state of network B, which may incorporate substantially the same type of criteria as the state of network A.
The cost of switching from the present network, for example, network A, to another network, for example, network B, such cost including, for example, delay in application execution and insufficiencies in channel utilizations during transition.

The input data enters the fuzzification process at stage 12 which sorts the inputs into membership values with associated linguistic variables. The input data may be stored in storage means (not shown) associated with stage 12 to compare current and historic values, for example.

Figure 2 shows input membership sets which include:
usable in present network
usable in possible network

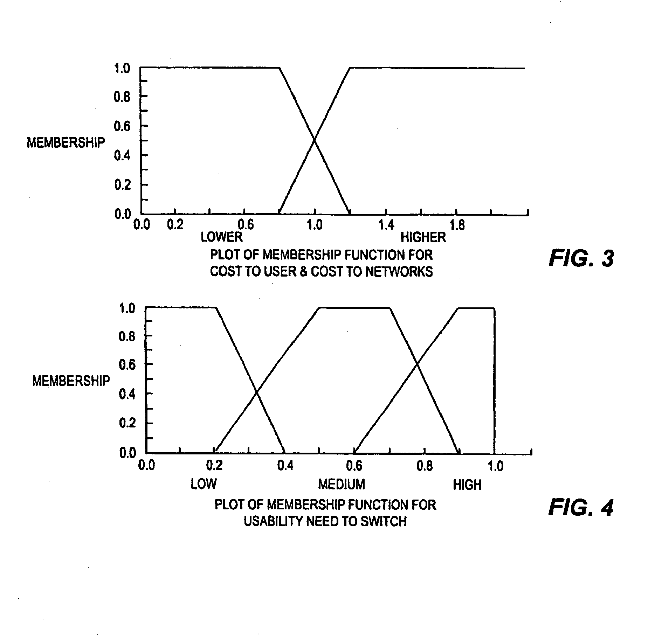

Regarding the costs to user, Figure 3 shows the ratio of present to possible cost to networks. Regarding cost to networks, Figure 3 also shows the ratio of present to possible.

The rules engine 14 operates on the membership values, generating output membership data. Figure 4 shows the usability need to switch.

The following rules are examples of the rules engine 14: (typically referred as linguistic rules)

Initialize rules results assume usability need to switch is low.

Rules applied:

If (usable In Present Network is low (Figure 2) AND usable In Possible Network is adequate or high (also Figure 2)) THEN usability need to switch is high.

If (usable In Present Network is adequate AND usable In Possible Network is high) THEN usability need to switch is medium.

The output of rules Engine 14 is then passed through the "Defuzzification" process at stage 16 to produce an actionable result, at 16a.

The following is one example:
Initialize decision
Switch decision IS no (a crisp binary variable of set {yes, no})
Determine if decision should be set to yes

IF (usability Need To Switch IS high)
THEN switch decision IS yes; EXIT

IF (usability Need To Switch IS medium)

IF (Cost To User IS Lower OR Cost To Networks IS lower)
THEN switch decision IS yes; EXIT

ELSE not a cost benefit to either one EXIT

ELSE usability Need To Switch IS low
IF (Cost To User IS lower AND control network is lower)
THEN Switch Decision IS yes; EXIT
ELSE number not a cost benefit for both; EXIT

The membership sets and rules outlined above are examples of the possibilities. Fuzzy logic facilitates use of additional inputs, rules, and outputs in a straight-forward manner, leading to rapid enhancement of the systems operation as required.

This type of system also lends itself to providing the users and system operators both with the means to determine the most important characteristics of operations to each of them. Even though these goals may be in conflict, the proper set up of the membership functions lead to reasonable and stable operation of the system.

## Claims

1. A method for switching between a first network and a second network, said method being **characterized in that** it comprises the steps of:
a) identifying and obtaining a plurality of inputs for use in making a switching determination, one of the inputs being user service subscription particulars and at least another one of said inputs being selected from the group consisting of: application quality of service, QoS, requirement, state of the first network, state of the second network, cost of switching from the first network presently connected, to the second network;
b) sorting the identified inputs obtained at step a) into membership values having an associated linguistic variable representing a need to switch;
c) providing output membership data based on said membership values;
d) providing a control output based on the output membership data obtained at step c), wherein switching determination is made responsive the control output; and
e) performing step d) responsive to a request for a switching operation.

2. The method of claim 1 wherein step a) further includes selecting the application QoS requirement which includes latency, fidelity and security.

3. The method of claim 1 wherein step a) further includes selecting service subscription particulars including priority and incremental costs.

4. The method of claim 1 wherein step a) further includes selecting, for each of the states of the first and second networks, loading and cost for a desired QoS.

5. The method of claim 1 wherein step a) further includes selecting, the cost of switching, inputs including delay in application execution and insufficiencies in channel utilization during transition.

6. The method of claim 1 wherein step a) further comprises storing the inputs and; step e) further comprises making a switching determination further based on a comparison of stored historic inputs and current inputs.

7. Apparatus (10) for determining the propriety of switching from a first to a second network, said apparatus being **characterized in that** it comprises:
a) means (12) for receiving input relating to input conditions of said first and second networks;
b) a fuzzifier (12) for generating membership values having linguistic variables based on current input conditions which are factors in determining the propriety of performing a switching operation, wherein one of the inputs is user service subscription particulars and at least another one of the inputs are selected from the group consisting of: application quality of service, QoS, requirement, state of the first network, state of the second network, cost of switching from the first network presently connected, to the second network;
c) a rules stage (14) for applying a set of predetermined rules to the current input conditions from said fuzzifier to obtain output membership data representing a need to switch and for providing a control output based on the output membership data; and
d) a defuzzifier (16) responsive to the control output of said rules stage for generating a non-fuzzy prediction recommending a given switching operation.

8. The apparatus (10) of claim 7 further comprising:
a controller performing an operation determined by said defuzzifier (16) responsive to a switching request.

9. The apparatus (10) of claim 7 wherein said means (12) for receiving further comprises:
means for storing inputs; and
said fuzzifier (12) including means for comparing stored inputs with current inputs to further aid in generating said membership values.

10. The apparatus (10) of claim 7 wherein the QoS requirement further includes selecting application QoS requirement such as latency, fidelity and security.

11. The apparatus (10) of claim 7 wherein the user service subscription particulars include priority and incremental costs.

12. The apparatus (10) of claim 7 wherein selecting, for the state of the networks, includes loading and cost for a desired QoS.

13. The apparatus (10) of claim 7 wherein the inputs further include, among the cost of switching, inputs including delay in application execution and insufficiencies in channel utilization during transition.

14. Apparatus (10) for switching between a first network and a second network, said apparatus being **characterized in that** it comprises:
means (12) for identifying and obtaining a plurality of inputs for use in making a switch determination, one of the inputs being user service subscription particulars and at least another one of said inputs being selected from the group consisting of: application quality of service, QoS, requirement, state of the first network, state of the second network, cost of switching from the first network presently connected, to the second network;
means (12) for sorting the identified inputs into membership values having an associated linguistic variable representing a need to switch;
means (14) for providing output membership data based on said membership values;
means (16) for providing a control output based on said membership values, wherein switching determination is made responsive the control output; and
means (16) for enabling, responsive to a request for a switching operation, said means for providing.

15. The apparatus (10) of claim 14 further comprising:
means (16) for making a switching determination responsive to said means for providing.

16. The apparatus (10) of claim 14 wherein said means (12) for identifying further comprises:
means for selecting the application QoS requirement which includes latency, fidelity and security.

17. The apparatus (10) of claim 14 wherein said means (12) for identifying further comprises:
means for selecting service subscription particulars including priority and incremental costs.

18. The apparatus (10) of claim 14 wherein said means (12) for identifying further comprises:
means for selecting, for each of the states of the first and second networks, loading and cost data for a desired QoS.

19. The apparatus (10) of claim 14 wherein said means (12) for identifying further comprises:
among the cost of switching, inputs including delay in application execution and insufficiencies in channel utilization during transition.

20. The apparatus (10) of claim 14 wherein said means (12) for identifying further comprises:
means for storing the inputs; and
said means (16) for making a switching determination being further based upon a means for comparison of stored historic inputs and current inputs.

## Patentansprüche

1. Verfahren zum Umschalten zwischen einem ersten Netzwerk und einem zweiten Netzwerk, wobei das Verfahren **dadurch gekennzeichnet ist, dass** es die folgenden Schritte umfasst:
a) Identifizieren und Erhalten mehrerer Eingangsangaben zur Verwendung beim Treffen einer Umschaltentscheidung, wobei eine der Eingangsangaben Benutzerdienstvertragseinzelheiten sind und mindestens eine andere der Eingangsangaben aus der Gruppe ausgewählt ist, die aus Folgendem besteht:
Anwendungsdienstgüte-, QoS, -Anforderung, Status des ersten Netzwerks, Status des zweiten Netzwerks, Kosten des Umschaltens vom ersten Netzwerk, das gegenwärtig verbunden ist, zum zweiten Netzwerk;
b) Einsortieren der identifizierten Eingangsangaben, die in Schritt a) erhalten wurden, in Mitgliedschaftswerte, die eine zugeordnete linguistische Variable aufweisen, die eine Notwendigkeit zum Umschalten repräsentiert;
c) Bereitstellen von Ausgangsmitgliedschaftsdaten basierend auf den Mitgliedschaftswerten;
d) Bereitstellen einer Steuerausgabe basierend auf den Ausgangsmitgliedschaftsdaten, die in Schritt c) erhalten wurden, wobei in Reaktion auf die Steuerausgabe eine Umschaltentscheidung getroffen wird; und
e) Durchführen von Schritt d) in Reaktion auf eine Anforderung eines Umschaltvorgangs.

2. Verfahren nach Anspruch 1, wobei Schritt a) ferner Auswählen der Anwendungsdienstgüteanforderung beinhaltet, die Latenzzeit, Wiedergabetreue und Sicherheit beinhaltet.

3. Verfahren nach Anspruch 1, wobei Schritt a) ferner Auswählen von Dienstvertragseinzelheiten einschließlich Priorität und Mehrkosten beinhaltet.

4. Verfahren nach Anspruch 1, wobei Schritt a) ferner Auswählen von Auslastung und Kosten für jeden der Status der ersten und zweiten Netzwerke für eine gewünschte Dienstgüte beinhaltet.

5. Verfahren nach Anspruch 1, wobei Schritt a) ferner Auswählen, unter den Kosten des Umschaltens, von Eingangsangaben einschließlich Verzögerung in der Anwendungsausführung und Unzulänglichkeiten in der Kanalnutzung während des Übergangs beinhaltet.

6. Verfahren nach Anspruch 1, wobei Schritt a) ferner Speichern der Eingangsangaben umfasst und Schritt e) ferner Treffen einer Umschaltentscheidung ferner basierend auf einem Vergleich gespeicherter historischer Eingangsangaben und aktueller Eingangsangaben umfasst.

7. Vorrichtung (10) zum Ermitteln der Angemessenheit des Umschaltens von einem ersten zu einem zweiten Netzwerk, wobei die Vorrichtung **dadurch gekennzeichnet ist, dass** sie Folgendes umfasst:
a) Mittel (12) zum Empfangen von Eingangsangaben in Bezug auf die Eingangsbedingungen der ersten und zweiten Netzwerke;
b) einen Fuzzifikator (12) zum Erzeugen von Mitgliedschaftswerten, die linguistische Variablen aufweisen, basierend auf aktuellen Eingangsbedingungen, die Faktoren beim Ermitteln der Angemessenheit des Durchführens eines Umschaltvorgangs sind, wobei eine der Eingangsangaben Benutzerdienstvertragseinzelheiten sind und mindestens eine andere der Eingangsangaben aus der Gruppe ausgewählt ist, die aus Folgendem besteht: Anwendungsdienstgüte-, QoS,-Anforderung, Status des ersten Netzwerks, Status des zweiten Netzwerks, Kosten des Umschaltens vom ersten Netzwerk, das gegenwärtig verbunden ist, zum zweiten Netzwerk;
c) eine Vorschriftenstufe (14) zum Anwenden eines Satzes vorgegebener Vorschriften auf die aktuellen Eingangsbedingungen vom Fuzzifikator, um Ausgangsmitgliedschaftsdaten zu erhalten, die eine Notwendigkeit zum Umschalten repräsentieren, und zum Bereitstellen einer Steuerausgabe basierend auf den Ausgangsmitgliedschaftsdaten und
d) einen Defuzzifikator (16), der durch die Steuerausgabe der Vorschriftenstufe ansprechbar ist, zum Erzeugen einer Nicht-Fuzzy-Vorhersage, die einen gegebenen Umschaltvorgang empfiehlt.

8. Vorrichtung (10) nach Anspruch 7, die ferner Folgendes umfasst:
eine Steuerung, die eine Operation durchführt, die durch den Defuzzifikator (16) in Reaktion auf eine Umschaltanforderung bestimmt worden ist.

9. Vorrichtung (10) nach Anspruch 7, wobei die Mittel (12) zum Empfangen ferner Folgendes umfassen:
Mittel zum Speichern von Eingangsangaben; und
wobei der Fuzzifikator (12) Mittel zum Vergleichen gespeicherter Eingangsangaben mit aktuellen Eingangsangaben beinhaltet, um ferner das Erzeugen der Mitgliedschaftswerte zu unterstützen.

10. Vorrichtung (10) nach Anspruch 7, wobei die Dienstgüteanforderung ferner Auswählen von Anwendungsdienstgüteanforderung wie z.B. Latenzzeit, Wiedergabetreue und Sicherheit beinhaltet.

11. Vorrichtung (10) nach Anspruch 7, wobei die Benutzerdienstvertragseinzelheiten Priorität und Mehrkosten beinhalten.

12. Vorrichtung (10) nach Anspruch 7, wobei Auswählen für den Status des Netzes Auslastung und Kosten für eine gewünschte Dienstgüte beinhaltet.

13. Vorrichtung (10) nach Anspruch 7, wobei die Eingangsangaben ferner unter den Kosten des Umschaltens Eingangsangaben einschließlich Verzögerung in der Anwendungsausführung und Unzulänglichkeiten in der Kanalnutzung während des Übergangs beinhalten.

14. Vorrichtung zum Umschalten zwischen einem ersten Netzwerk und einem zweiten Netzwerk, wobei die Vorrichtung **dadurch gekennzeichnet ist, dass** sie Folgendes umfasst:
Mittel (12) zum Identifizieren und Erhalten mehrerer Eingangsangaben zur Verwendung beim Treffen einer Umschaltentscheidung, wobei eine der Eingangsangaben Benutzerdienstvertragseinzelheiten sind und mindestens eine andere der Eingangsangaben aus der Gruppe ausgewählt ist, die aus Folgendem besteht: Anwendungsdienstgüte-, QoS-, -Anforderung, Status des ersten Netzwerks, Status des zweiten Netzwerks, Kosten des Umschaltens vom ersten Netzwerk, das gegenwärtig verbunden ist, zum zweiten Netzwerk;
Mittel (12) zum Einsortieren der identifizierten Eingangsangaben in Mitgliedschaftswerte, die eine zugeordnete linguistische Variable aufweisen, die eine Notwendigkeit zum Umschalten repräsentiert;
Mittel (14) zum Bereitstellen von Ausgangsmitgliedschaftsdaten basierend auf den Mitgliedschaftswerten;
Mittel (16) zum Bereitstellen einer Steuerausgabe basierend auf den Mitgliedschaftswerten, wobei in Reaktion auf die Steuerausgabe eine Umschaltentscheidung getroffen wird; und
Mittel (16) zum Aktivieren der Mittel zum Bereitstellen in Reaktion auf eine Anforderung über einen Umschaltvorgang.

15. Vorrichtung (10) nach Anspruch 14, die ferner Folgendes umfasst:
Mittel (16) zum Treffen einer Umschaltentscheidung in Reaktion auf die Mittel zum Bereitstellen.

16. Vorrichtung (10) nach Anspruch 14, wobei die Mittel (12) zum Identifizieren ferner Folgendes umfassen:
Mittel zum Auswählen der Anwendungsdienstgüteanforderung, die Latenzzeit, Wiedergabetreue und Sicherheit beinhaltet.

17. Vorrichtung (10) nach Anspruch 14, wobei die Mittel (12) zum Identifizieren ferner Folgendes umfassen:
Mittel zum Auswählen von Benutzerdienstvertragseinzelheiten, die Priorität und Mehrkosten beinhalten.

18. Vorrichtung (10) nach Anspruch 14, wobei die Mittel (12) zum Identifizieren ferner Folgendes umfassen:
Mittel zum Auswählen von Auslastungs- und Kostendaten für jeden der Status der ersten und zweiten Netzwerke für eine gewünschte Dienstgüte.

19. Vorrichtung (10) nach Anspruch 14, wobei die Mittel (12) zum Identifizieren ferner Folgendes umfassen:
unter den Kosten des Umschaltens Eingangsangaben einschließlich Verzögerung in der Anwendungsausführung und Unzulänglichkeiten in der Kanalnutzung während des Übergangs.

20. Vorrichtung (10) nach Anspruch 14, wobei die Mittel (12) zum Identifizieren ferner Folgendes umfassen:
Mittel zum Speichern der Eingangsangaben; und
wobei die Mittel (16) zum Treffen einer Umschaltentscheidung ferner auf einem Mittel zum Vergleich gespeicherter historischer Eingangsangaben und aktueller Eingangsangaben basiert sind.

## Revendications

1. Procédé de commutation entre un premier réseau et un deuxième réseau, ledit procédé étant **caractérisé en ce qu'**il comprend les étapes de :
a) l'identification et l'obtention d'une pluralité d'entrées à utiliser pour effectuer une détermination de commutation, l'une des entrées étant des caractéristiques d'abonnement de service d'utilisateur et au moins une autre desdites entrées étant sélectionnée dans le groupe se composant de : exigence de qualité de service, QoS, d'application, état du premier réseau, état du deuxième réseau, coût de commutation à partir du premier réseau actuellement connecté au deuxième réseau ;
b) le tri des entrées identifiées obtenues à l'étape a) en valeurs d'adhésion ayant une variable linguistique associée représentant un besoin de commutation ;
c) la fourniture de données d'adhésion de sortie sur la bases desdites valeurs d'adhésion ;
d) la fourniture d'une sortie de commande sur la base des données d'adhésion de sortie obtenues à l'étape c), dans lequel une détermination de commutation est effectuée en réponse à la sortie de commande ; et
e) l'exécution de l'étape d) en réponse à une demande d'une opération de commutation.

2. Procédé selon la revendication 1, dans lequel l'étape a) comprend en outre la sélection de l'exigence de QoS d'application qui comprend une latence, une fidélité et une sécurité.

3. Procédé selon la revendication 1, dans lequel l'étape a) comprend en outre la sélection des caractéristiques d'abonnement de service comprenant une priorité et des coûts marginaux.

4. Procédé selon la revendication 1, dans lequel l'étape a) comprend en outre la sélection, pour chacun des états du premier réseau et du deuxième réseau, d'une charge et d'un coût pour une QoS souhaitée.

5. Procédé selon la revendication 1, dans lequel l'étape a) comprend en outre la sélection, parmi le coût de commutation, d'entrées comprenant un délai d'exécution d'application et des insuffisances d'utilisation de canal au cours d'une transition.

6. Procédé selon la revendication 1, dans lequel l'étape a) comprend en outre la mémorisation des entrées ; et l'étape e) comprend en outre la réalisation d'une détermination de commutation en outre sur la base d'une comparaison d'entrées historiques mémorisées et d'entrées actuelles.

7. Appareil (10) de détermination de l'adéquation de commutation d'un premier réseau à un deuxième réseau, ledit appareil étant **caractérisé en ce qu'**il comprend :
a) un moyen (12) pour effectuer la réception d'entrées relatives à des conditions d'entrée dudit premier réseau et dudit deuxième réseau ;
b) un fuzzificateur (12) pour effectuer la génération de valeurs d'adhésion ayant des variables linguistiques sur la base de conditions d'entrée actuelles constituant des facteurs dans la détermination de l'adéquation d'exécution d'une opération de commutation, dans lequel l'une des entrées est des caractéristiques d'abonnement de service d'utilisateur et au moins une autre des entrées est sélectionnée dans le groupe se composant de : exigence de qualité de service, QoS, d'application, état du premier réseau, état du deuxième réseau, coût de commutation à partir du premier réseau actuellement connecté au deuxième réseau ;
c) un étage de règles (14) pour effectuer l'application d'un ensemble de règles prédéterminées aux conditions d'entrée actuelles à partir dudit fuzzificateur afin d'obtenir des données d'adhésion de sortie représentant un besoin de commutation et l'obtention d'une sortie de commande sur la base des données d'adhésion de sortie ; et
d) un défuzzificateur (16) en réponse à la sortie de commande dudit étage de règles pour effectuer la génération d'une prédiction non floue recommandant une opération de commutation donnée.

8. Appareil (10) selon la revendication 7, comprenant en outre :
un organe de commande exécutant une opération déterminée par ledit défuzzificateur (16) en réponse à une demande de commutation.

9. Appareil (10) selon la revendication 7, dans lequel ledit moyen (12) de réception comprend en outre :
un moyen pour effectuer la mémorisation d'entrées ; et
ledit défuzzificateur (12) comprenant un moyen pour effectuer la comparaison d'entrées mémorisées à des entrées actuelles pour contribuer en outre à la génération desdites valeurs d'adhésion.

10. Appareil (10) selon la revendication 7, dans lequel l'exigence de QoS comprend en outre la sélection d'une l'exigence de QoS d'application telle qu'une latence, une fidélité et une sécurité.

11. Appareil (10) selon la revendication 7, dans lequel les caractéristiques d'abonnement de service d'utilisateur comprennent une priorité et des coûts marginaux.

12. Appareil (10) selon la revendication 7, dans lequel la sélection, pour l'état des réseaux, comprend une charge et un coût pour une QoS souhaitée.

13. Appareil (10) selon la revendication 7, dans lequel les entrées comprennent en outre, parmi le coût de commutation, des entrées comprenant un délai d'exécution d'application et des insuffisances d'utilisation de canal au cours d'une transition.

14. Appareil (10) de commutation entre un premier réseau et un deuxième réseau, ledit appareil étant **caractérisé en ce qu'**il comprend :
un moyen (12) pour effectuer l'identification et l'obtention d'une pluralité d'entrées à utiliser pour effectuer une détermination de commutation, l'une des entrées étant des caractéristiques d'abonnement de service d'utilisateur et au moins une autre desdites entrées étant sélectionnée dans le groupe se composant de : exigence de qualité de service, QoS, d'application, état du premier réseau, état du deuxième réseau, coût de commutation à partir du premier réseau actuellement connecté au deuxième réseau ;
un moyen (12) pour effectuer le tri des entrées identifiées en valeurs d'adhésion ayant une variable linguistique associée représentant un besoin de commutation ;
un moyen (14) pour effectuer la fourniture de données d'adhésion de sortie sur la base desdites valeurs d'adhésion ;
un moyen (16) pour effectuer la fourniture d'une sortie de commande sur la base desdites valeurs d'adhésion, dans lequel une détermination de commutation est effectuée en réponse à la sortie de commande ; et
un moyen (16) pour effectuer l'activation, en réponse à une demande d'une opération de commutation, dudit moyen pour effectuer la fourniture.

15. Appareil (10) selon la revendication 14, comprenant en outre :
un moyen (16) pour effectuer une détermination de commutation en réponse au dit moyen pour effectuer la fourniture.

16. Appareil (10) selon la revendication 14, dans lequel ledit moyen (12) pour effectuer l'identification comprend en outre :
un moyen pour effectuer la sélection de l'exigence de QoS d'application qui comprend une latence, une fidélité et une sécurité.

17. Appareil (10) selon la revendication 14, dans lequel ledit moyen (12) pour effectuer l'identification comprend en outre :
un moyen pour effectuer la sélection de caractéristiques d'abonnement de service comprenant une priorité et des coûts marginaux.

18. Appareil (10) selon la revendication 14, dans lequel ledit moyen (12) pour effectuer l'identification comprend en outre :
un moyen pour effectuer la sélection, pour chacun des états du premier réseau et du deuxième réseau, de données de charge et de coût pour une QoS souhaitée.

19. Appareil (10) selon la revendication 14, dans lequel ledit moyen (12) pour effectuer l'identification comprend en outre :
parmi le coût de commutation, des entrées comprenant un délai d'exécution d'application et des insuffisances d'utilisation de canal au cours d'une transition.

20. Appareil (10) selon la revendication 14, dans lequel ledit moyen (12) pour effectuer l'identification comprend en outre :
un moyen pour effectuer la mémorisation des entrées ; et
ledit moyen (16) pour effectuer la réalisation d'une détermination de commutation est en outre basé sur un moyen pour effectuer une comparaison d'entrées historiques mémorisées et d'entrées actuelles.
